# EUROPÄISCHE PATENTSCHRIFT

(11) **EP 3 124 778 B1**
(45) Veröffentlichungstag und Bekanntmachung des Hinweises auf die Patenterteilung: **04.08.2021**
(21) Anmeldenummer: 16001428.8
(22) Anmeldetag: 24.06.2016
(51) Int. Cl.: F02G 5/02, B60W 20/00

(54) **VORRICHTUNG UND VERFAHREN FÜR EINE KOMBINIERTE ELEKTRISCHE UND MECHANISCHE NUTZUNG DER ENERGIE EINER EXPANSIONSMASCHINE**
DEVICE AND METHOD FOR A COMBINED ELECTRICAL AND MECHANICAL USE OF THE ENERGY OF AN EXPANSION MACHINE
DISPOSITIF ET PROCEDE POUR L'UTILISATION COMBINEE ELECTRIQUE ET MECANIQUE DE L'ENERGIE D'UNE MACHINE A EXPANSION

(30) Priorität: 25.07.2015 DE 102015009636
(43) Veröffentlichungstag der Anmeldung: 01.02.2017
(73) Patentinhaber: MAN Truck & Bus SE, 80995 München (DE)
(72) Erfinder: Möller, Heribert, 91623 Sachsen (DE); Raab, Gottfried, 4320 Perg (AT); Klammer, Josef, 4400 Steyr (AT); von Esebeck, Götz, 15831 Mahlow (DE); Robausch, Stefan, 4400 St. Ulrich bei Steyr (AT)
(74) Vertreter: v. Bezold & Partner Patentanwälte - PartG mbB

(56) Entgegenhaltungen:
- EP-A1- 1 243 758
- EP-A1- 1 574 698
- WO-A1-2015/197087
- DE-A1-102005 058 202
- JP-A- 2010 077 901
- KR-A- 20150 075 975
- US-A1- 2014 012 430

## Beschreibung

Die Erfindung betrifft eine Vorrichtung, vorzugsweise für ein Kraftfahrzeug, insbesondere für ein Nutzfahrzeug, z. B. einen Lastkraftwagen oder einen Omnibus, die eine wahlweise und somit kombinierte elektrische Nutzung und mechanische Nutzung der Energie einer Expansionsmaschine eines z. B. mobilen Abwärmenutzungssystems ermöglicht.

In Systemen zur Abwärmenutzung (Waste Heat Recovery = WHR) von Verbrennungskraftmaschinen kommen unter anderem Dampfkreisläufe zur Anwendung. Dabei muss ein Kreislaufmedium auf ein hohes Druckniveau gebracht, in einem Verdampfer verdampft und überhitzt werden. Dieser Dampf wird einer Expansionsmaschine zugeführt, die die im Dampf gespeicherte Energie in nutzbare Energie umwandelt. Nach der Expansionsmaschine wird der Dampf wieder verflüssigt und einer Speisepumpe zugeführt.

Aus der Praxis ist es bekannt, die von der Expansionsmaschine generierte Antriebsenergie auf zwei Arten zu nutzen, nämlich entweder elektrisch oder mechanisch.

### Zur elektrischen Nutzung:

Dabei ist die Expansionsmaschine an einen Generator gekoppelt. Der Generator wandelt die mechanische Energie der Expansionsmaschine in elektrische Energie um. Die erzeugte elektrische Energie wird über einen Elektromotor wieder dem Verbrennungsmotor zugeführt und reduziert damit den Kraftstoffverbrauch des Verbrennungsmotors.

Die Verwendung der erzeugten elektrischen Energie zur Aufrechterhaltung des Bordnetzes eines Kraftfahrzeugs ist deshalb nicht zielführend, da das Leistungsangebot (z. B. 5 kW in einem Hauptbetriebsbereich) über der benötigten Leistung liegt (z. B. 2 kW). Vielmehr müssten mehrere bisher mechanisch angetriebene Komponenten elektrifiziert werden, um im Kraftfahrzeug den Bedarf an elektrischer Energie zu erhöhen (z. B. Lenkhilfepumpe, Kühlmittelpumpe, diverse Aktuatoren). Dabei ergibt sich das Problem, dass die Energie aus dem WHR-System nicht permanent in voller Höhe zur Verfügung steht. Beispielsweise nach einem Kaltstart benötigt das System einige Minuten zum Aufheizen, bis die Expansionsmaschine betrieben werden kann. Bei hohen Temperaturen reduziert sich aufgrund begrenzter Leistung der Fahrzeugkühlanlage auch die generierbare Energie der Expansionsmaschine des WHR-Systems. In diesen Fällen müsste dann der hohe elektrische Energiebedarf des Kraftfahrzeugs anders erzeugt werden, was zusätzliche Generatoren am Verbrennungsmotor erfordern kann.

Allerdings erlaubt eine elektrische Nutzung der Expanderenergie einen hinsichtlich Drehzahl und Positionierung motorunabhängige Anbindung der Expansionsmaschine. Dies führt dazu, dass die Expansionsmaschine nicht zwingend am Verbrennungsmotor verbaut sein muss und dass die Expansionsmaschine trotz schwankender Verbrennungsmotor-Drehzahlen in einem optimalen Drehzahlbereich betrieben werden kann. Dieser Vorteil kann den Nachteil der Wirkungsgradkette Expander - Generator - Elektromotor - Verbrennungsmotor ausgleichen oder sogar überkompensieren. Ein weiterer Vorteil der elektrischen Nutzung besteht darin, in Kombination mit einer Batterie die elektrische Energie zwischenspeichern zu können. Dadurch kann das WHR-System auch Energie generieren, wenn sich der Verbrennungsmotor beispielsweise im Bremsbetrieb befindet. Die zwischengespeicherte Energie wird dann zeitversetzt wieder über den Elektromotor dem Verbrennungsmotor zur Verfügung gestellt.

Generatoren für eine elektrische Nutzung der Expanderenergie werden aufgrund der erforderlichen Leistungen üblicherweise mit Betriebsspannungen größer 24V arbeiten. Prinzipiell eignen sich hochdrehende Strömungsmaschinen (Dampfturbinen) besser zur Koppelung mit einem Generator als Arbeitsraum bildende Maschinen (z. B. Kolbenmaschinen) mit niedrigeren Drehzahlen, da hochdrehende Generatoren kompakter bauen.

### Zur mechanischen Nutzung:

Dabei ist die Expansionsmaschine über eine Transmission mit dem Verbrennungsmotor mechanisch gekoppelt. Aufgabe der Transmission ist die Drehzahlwandlung und die Überbrückung von Abständen zwischen Expansionsmaschine und Verbrennungsmotor, sowie die Verbindung und Trennung der Expansionsmaschine mit dem Verbrennungsmotor. Die Transmission kann aus einem Trieb in verschiedenen Ausführungen (z. B. Reibrad-, Stirnrad-, Planetengetriebe, Ketten- und/oder Riementrieb etc.) oder deren Kombinationen bestehen und einem aktiven oder passiven Schaltelement zur Verbindung und Trennung von Expansionsmaschine und Verbrennungsmotor (z. B. Klemmkörperfreilauf, schaltbarer Freilauf, elektrisch oder hydraulisch betätigte Lamellenkupplung etc.). Die Transmission führt die mechanische Energie der Expansionsmaschine wieder dem Verbrennungsmotor zu und reduziert damit den Kraftstoffverbrauch des Verbrennungsmotors.

Ein Vorteil der mechanischen Koppelung ist, dass die Expanderenergie nicht immer permanent zur Verfügung stehen muss. Ist das WHR-System aktiv, führt die zusätzliche mechanische Energie der Expansionsmaschine zu einer Reduktion des Kraftstoffverbrauchs, wenn das System nicht betriebsbereit ist, kompensiert der Verbrennungsmotor diese fehlende Energie.

Allerdings ergibt ein mechanisches Nutzungskonzept der Expanderenergie einen hinsichtlich Drehzahl und Positionierung motorabhängige Anbindung der Expansionsmaschine. Dies führt dazu, dass die Expansionsmaschine zwingend am Verbrennungsmotor verbaut sein muss, um mit möglichst kurzen Wegen die Energie in die Kurbelwelle des Verbrennungsmotors einleiten zu können. Zusätzlich führt eine schwankende Motordrehzahl auch zu einer schwankenden Expanderdrehzahl, wodurch die Expansionsmaschine nicht immer in einem optimalen Drehzahlbereich betrieben werden kann. Dieser Nachteil kann durch den Vorteil der kurzen Wirkungsgradkette Expander - Transmission - Verbrennungsmotor ausgeglichen oder sogar überkompensiert werden, da moderne Transmissionen sehr hohe Wirkungsgrade aufweisen. Auch kann der Nachteil der Drehzahlschwankungen durch die Wahl jener Expandertypen reduziert werden, welche eine sehr flache Kennlinie im Wirkungsgrad-Drehzahl-Kennfeld aufweisen.

Ein weiterer Nachteil der mechanischen Nutzung besteht darin, dass keine Energie zwischengespeichert werden kann. Dadurch kann das WHR-System keine Energie generieren, wenn sich der Verbrennungsmotor beispielsweise im Bremsbetrieb befindet. Die aufgrund der thermischen Trägheit im Kreislauf gespeicherte Energie muss an der Expansionsmaschine vorbeigeführt und kann somit nicht nutzbringend verwendet werden.

EP 1 574 698 A1 offenbart) eine Vorrichtung für ein Kraftfahrzeug, insbesondere Nutzfahrzeug, mit einem Verbrennungsmotor, einer Expansionsmaschine und einem Generator, wobei die Expansionsmaschine und der Generator sowohl untereinander als auch jeweils mit dem Verbrennungsmotor über eine Transmission wirkverbindbar sind, um eine wahlweise elektrische Nutzung und mechanische Nutzung der Energie der Expansionsmaschine zu ermöglichen.

Prinzipiell eignen sich Arbeitsraum-bildende Maschinen (z. B. Kolbenmaschinen) mit niedrigeren Drehzahlen besser zur mechanischen Koppelung über eine Transmission als hochdrehende Strömungsmaschinen (Dampfturbinen), da die Transmission einfacher ausgeführt werden kann.

Eine Aufgabe der Erfindung ist es, die zuvor beschriebenen Vorteile der bekannten Nutzungskonzepte zu kombinieren bzw. die Nachteile zu überwinden, insbesondere eine Möglichkeit zu schaffen, mittels der ein Abwärmenutzungssystem effektiver genutzt werden kann.

Diese Aufgabe wird mit den Merkmalen des unabhängigen Anspruchs gelöst. Vorteilhafte Weiterbildungen der Erfindungen können den Unteransprüchen und der folgenden Beschreibung bevorzugter Ausführungsformen der Erfindung entnommen werden.

Das erfindungsgemäße Konzept betrifft insbesondere eine Vorrichtung, die anstelle einer reinen elektrischen Nutzung oder einer reinen mechanischen Nutzung eine kombinierte Nutzung der rückgewonnenen Energie einer Expansionsmaschine eines Abwärmenutzungssystems ermöglichen.

Die Erfindung schafft eine Vorrichtung, vorzugsweise für ein Kraftfahrzeug, z. B ein Nutzfahrzeug, insbesondere einen Lastkraftwagen oder einen Omnibus.

Die Vorrichtung umfasst einen Verbrennungsmotor (z. B. Otto-, Diesel- oder Gasmotor oder einen mit alternativem Kraftstoff antreibbaren Motor), eine Expansionsmaschine und einen Generator. Die Expansionsmaschine und/oder der Generator können zweckmäßig direkt oder mittelbar an den Verbrennungsmotor angebaut sein.

Die Vorrichtung zeichnet sich dadurch aus, dass die Expansionsmaschine und der Generator sowohl untereinander als auch jeweils mit dem Verbrennungsmotor, vorzugsweise einer Welle (z. B. Kurbelwelle oder Nebenabtriebswelle) oder eines Nebenabtriebs des Verbrennungsmotors, über eine Transmission wirkverbindbar sind, so dass eine wahlweise und somit kombinierte elektrische Nutzung und mechanische Nutzung der Energie der Expansionsmaschine ermöglicht wird. Im Rahmen der Erfindung kann der Generator über die Transmission vorzugsweise mit dem Verbrennungsmotor fest und/oder nicht-schaltbar, insbesondere permanent, wirkverbunden sein, so dass z. B. die Wirkverbindung zwischen dem Generator und dem Verbrennungsmotor nicht trennbar ist und somit zweckmäßig nicht wahlweise hergestellt und getrennt werden kann. Im Rahmen der Erfindung ist es alternativ oder ergänzend allerdings möglich, dass die Wirkverbindung zwischen der Expansionsmaschine und dem Verbrennungsmotor mittels der Transmission hergestellt und getrennt werden kann.

Die Transmission kann zweckmäßig ausgelegt sein, die Wirkverbindung der Expansionsmaschine mit dem Verbrennungsmotor wahlweise herzustellen und zu trennen, hingegen zweckmäßig eine feste und/oder nicht-schaltbare, insbesondere permanente, Wirkverbindung zwischen dem Generator und dem Verbrennungsmotor zu gewährleisten.

Die Transmission kann einen Trieb und ein Schaltelement aufweisen. Der Trieb der Transmission kann z. B. eine ein- oder mehrstufige Reib- oder Stirnradstufe sein, zweckmäßig ohne oder mit zumindest einem Zwischenrad, z. B. in einen Rädertrieb des Verbrennungsmotors integriert oder separat dazu angeordnet. Der Trieb der Transmission kann ebenfalls als Hülltrieb (z. B. Ketten- oder Riementrieb) ausgeführt sein oder aus einer Kombination von verschiedenen Trieben bestehen.

Die Transmission kann, zweckmäßig abhängig von der Art der Expansionsmaschine, vorzugsweise zusätzlich zum Trieb zumindest ein Kupplungs- oder Schaltelement aufweisen, mit dem die Verbindung zwischen Expansionsmaschine und Verbrennungsmotor getrennt werden kann, um z. B. beim Kaltstart die Expansionsmaschine nicht mitschleppen zu müssen.

Das Kupplungs- oder Schaltelement der Transmission kann zweckmäßig aktiv (z. B. elektrisch oder hydraulisch betätigte Lamellenkupplung, schaltbarer Freilauf, etc.) oder passiv sein (z. B. Klemmkörperfreilauf). Die aktive Ausführung umfasst vorzugsweise eine elektrische oder hydraulische Betätigung.

Die Transmission kann, zweckmäßig abhängig von der Art der Expansionsmaschine, vorzugsweise zusätzlich zum Trieb zumindest ein Entkoppelungselement aufweisen, mit dem die Übertragung von Drehschwingungen zwischen (den zweckmäßig verbundenen Komponenten) Expansionsmaschine - Verbrennungsmotor - Generator unterbunden werden kann. Das Entkoppelungselement der Transmission kann z. B. eine torsionselastische Verbindung sein.

Der Generator kann z. B. als Niederspannungsgenerator (z. B. 24V oder 48V) oder Hochspannungsgenerator (z. B. 400V bis 800V) ausgeführt sein.

Die Vorrichtung kann insbesondere ein Motorstaubremssystem (z. B. Auspuffklappenbremse, Turbo-Auspuffklappenbremse, Exhaust Valve Brake System, Turbo Exhaust Valve Brake System) umfassen.

Es ist möglich, dass die Expansionsmaschine Teil eines z. B. mobilen Abwärmenutzungssystems zur Umwandlung von Abwärme des Verbrennungsmotors und/oder zur Umwandlung von Abwärme des Motorstaubremssystems in nutzbare Energie ist, vorzugsweise mittels eines Dampfkreislaufs, z. B. eines ORC-Prozesses (Organic Rankine Cycle). Das Abwärmenutzungssystem, insbesondere die Expansionsmaschine dienen somit insbesondere zur Energierekuperation aus der Abwärme des Verbrennungsmotors.

Erfindungsgemäß sind die Expansionsmaschine und der Generator sowohl untereinander als auch jeweils mit einer Welle des Verbrennungsmotors über die Transmission wirkverbindbar. Die Welle umfasst vorzugsweise die Kurbelwelle des Verbrennungsmotors.

Es ist möglich, dass der Generator als Motor-Generator ausgeführt ist, vorzugsweise um wahlweise als Generator zweckmäßig stromerzeugend oder als Motor zweckmäßig stromverbrauchend zu wirken, insbesondere um wahlweise in einem Generator-Betriebsmodus stromerzeugend und in einem Motor-Betriebsmodus stromverbrauchend zu arbeiten. Alternativ ist es möglich, dass der Generator als reiner Generator ausgeführt ist und somit zweckmäßig keine Motor-Funktion aufweist.

Erfindungsgemäß ist der Generator über eine zweckmäßig elektrische und/oder elektronische Verbindung mit einem zweckmäßig elektrischen und/oder elektronischen System verbunden. Der Generator kann z. B. über zumindest eine elektrische und/oder elektronische Leitung mit dem System verbunden sein. Es ist ebenfalls möglich, dass das System oder zumindest Teile davon an dem Generator z. B. unmittelbar verbaut sind.

Das System weist einen mittels des Generators aufladbaren Energiespeicher zur Speicherung elektrischer Energie, zumindest einen elektrischen Verbraucher eines Kraftfahrzeugs (z. B. Lenkhilfspumpe, Kühlmittelpumpe und/oder ein oder mehrere Aktuatoren), einen z. B. DC/DC-Wandler zur Versorgung eines Bordnetzes eines Kraftfahrzeugs, und eine Steuereinrichtung zur Steuerung des Generators auf. Das System kann zusätzlich einen Elektromotor, über den Energie aus dem Energiespeicher in mechanische Energie umgewandelt und dem Verbrennungsmotor zur Verfügung gestellt werden kann, aufweisen.

Das elektrische und/oder elektronische System kann Teil einer im Kraftfahrzeug verbauten elektrischen und/oder elektronischen Infrastruktur eines hybriden Antriebssystems sein, z .B. mit einem hybriden Antriebssystem verbunden und/oder kombiniert sein.

Der Energiespeicher kann z. B. eine oder mehrere Nieder- oder Hochvoltbatterien aufweisen, z. B. 24-, 48- oder 400V- bis 800V-Batterien.

Es ist wie zuvor erwähnt möglich, dass das System einen Elektromotor aufweist, über den Energie aus dem Energiespeicher dem Verbrennungsmotor zur Verfügung gestellt werden kann. In diesem Fall ist der Generator zweckmäßig nicht als Motor-Generator, sondern als reiner Generator ausgeführt. Der Elektromotor des Systems ist vorzugsweise ein relativ zum Generator separates Bauteil, z. B. der Elektromotor eines bereits im Fahrzeug verbauten hybriden Antriebssystems sein.

Das System, zweckmäßig dessen Energiespeicher, kann z. B. dazu dienen, elektrische Energie für ein Bord-Netz eines Kraftfahrzeugs und/oder zumindest einen elektrischen Verbraucher eines Kraftfahrzeugs zur Verfügung zu stellen, z. B. über einen DC/DC-Wandler, der optional in das System integriert sein kann. So kann insbesondere über den vorzugsweise in das System integrierten DC/DC-Wandler bei höheren Betriebsspannungen des Generators (z. B. 48V) auch die elektrische Energie für das Bord-Netz und/oder den zumindest einen elektrischen Verbraucher auf einem niedrigen Spannungsniveau (z. B. 24V-Spannungsniveau) zur Verfügung gestellt werden. Dadurch kann zweckmäßig möglicherweise der bisherige 24-Volt-Generator entfallen und in den frei werdenden Bauraum können z. B. die Komponenten Expansionsmaschine und Generator nahezu bauraumneutral verbaut werden.

Es ist möglich, dass die Speichereinrichtung (z. B. 48-Volt-Batterien) den Großteil der Speicherkapazität der bisherigen 24-Volt-Batterien ersetzt, wobei zweckmäßig lediglich für den Starter des Kraftfahrzeugs eine Restkapazität auf 24-Volt-Basis erforderlich bleibt.

Der Generator ist vorzugsweise mit dem Verbrennungsmotor fest und/oder nicht-schaltbar, z.B. untrennbar und/oder permanent, wirkverbunden.

Die Transmission ist vorzugsweise ausgeführt, um die Wirkverbindung der Expansionsmaschine mit dem Verbrennungsmotor wahlweise herzustellen und zu trennen. Alternativ oder ergänzend kann die Transmission eine feste und/oder nicht-schaltbare (z.B. untrennbare und/oder permanente) Wirkverbindung zwischen dem Generator und dem Verbrennungsmotor ausbilden.

Im Rahmen der Erfindung liegt vorzugsweise somit zwischen der Expansionsmaschine und dem Verbrennungsmotor eine zweckmäßig schaltbare Wirkverbindung vor, hingegen zwischen dem Generator und dem Verbrennungsmotor eine zweckmäßig feste und/oder nicht-schaltbare (z.B. untrennbare und/oder permanente) Wirkverbindung.

Die Vorrichtung kann in unterschiedlichen Betriebsmodi betrieben werden, nämlich in einem Expanderbetrieb, einem Generatorbetrieb und/ einem Motorbetrieb.

Erfindungsgemäß wandelt in einem Expanderbetrieb das Abwärmenutzungssystem Abwärme des Verbrennungsmotors in nutzbare Energie um und die Expansionsmaschine generiert daraus mechanische Energie und stellt die mechanische Energie über die Transmission dem Verbrennungsmotor zur Verfügung und der Generator wirkt währenddessen zweckmäßig als Generator und erzeugt aus der nutzbaren Energie elektrische Energiefür das System.

Es ist möglich, dass im Expanderbetrieb der Verbrennungsmotor Antriebsenergie generiert.

Durch das Abwärmenutzungssystem rekuperierte Energie kann also zweckmäßig auf den Verbrennungsmotor in Form mechanischer Nutzung einerseits und auf das System in Form elektrischer Nutzung andererseits aufgeteilt werden.

Im Generatorbetrieb kann das Abwärmenutzungssystem noch nicht betriebsbereit sein und/oder sich in einer Aufwärmphase (z. B. Kaltstart) befinden, in der die Expansionsmaschine noch keine mechanische Energie generiert.

Erfindungsgemäß wirkt der Generator im Generatorbetrieb als Generator und zweckmäßig kann der Verbrennungsmotor in einem Schub- und/oder Bremsbetrieb sein. Die Expansionsmaschine generiert trotz fehlendem oder geringem Wärmeeintrag aus dem Verbrennungsmotor, noch nutzbare Energie wegen der thermischen Trägheit des Abwärmenutzungssystems. Die nutzbare Energie wird dem Generator zur Umwandlung in elektrische Energie und Weiterleitung an das System zur Verfügung gestellt. Ergänzend kann dem Generator über die Transmission mechanische Energie von dem Verbrennungsmotor zur Verfügung gestellt werden, um sie in elektrische Energie umzuwandeln und an das System weiterzuleiten.

Erfindungsgemäß wirkt in einem Motorbetrieb der Generator als Motor oder ein Elektromotor des Systems wirkt als Motor.

Es ist möglich, dass in einem Motorbetrieb die Expansionsmaschine wieder mechanische Energie generiert oder zumindest damit beginnt, und die mechanische Energie über die Transmission dem Verbrennungsmotor zur Verfügung stellt.

Erfindungsgemäß wirkt im Motorbetrieb der Generator als Motor oder ein Elektromotor des Systems wirkt als Motor und aus dem Energiespeicher stammende elektrische Energie wird in mechanische Energie umgewandelt und über die Transmission dem Verbrennungsmotor zur Verfügung gestellt.

Insbesondere kann im Motorbetrieb die Expansionsmaschine entweder keine Energie generieren, mechanische Energie generieren bzw. zumindest damit beginnen, mechanische Energie zu generieren und diese über die Transmission dem Verbrennungsmotor zur Verfügung stellen.

Es ist möglich, dass in einem Generatorbetrieb der Generator als Generator wirkt und die Expansionsmaschine mittels Wärmeeintrags aus dem Motorstaubremssystem, aber vorzugsweise ohne Wärmeeintrag aus der innermotorischen Verbrennung des Verbrennungsmotors, nutzbare Energie erzeugt und die nutzbare Energie im Energiespeicher gespeichert wird und z. B. in einem anschließenden Motorbetrieb dem Verbrennungsmotor zur Verfügung gestellt wird. Zu erwähnen ist, dass der Wärmeeintrag aus dem Motorstaubremssystem zweckmäßig mittelbar über das Abwärmenutzungssystem in die Expansionsmaschine erfolgt.

Es ist folglich insbesondere möglich, dass der Wärmeeintrag aus dem Verbrennungsmotor entweder aus der innermotorischen Verbrennung oder dem Motorstaubremssystem stammen kann.

Der Generator oder der Elektromotor des Systems können im Motorbetrieb vorzugsweise so lange als Motor wirken, bis der Energiespeicher zumindest großteils (z. B. bis auf den minimal erlaubten Ladezustand der Batterie) entleert ist und der Generator wieder in einen Generatorbetrieb übergeht.

Der Verbrennungsmotor kann als Dieselmotor, Ottomotor oder Gasmotor ausgeführt sein, zum Beispiel für stationäre oder mobile (z. B. on-road, off-road oder marine) Anwendungen. Ebenfalls kann der Verbrennungsmotor mit alternativen Kraftstoffen betreibbar sein.

Zu erwähnen ist, dass die Expansionsmaschine und/oder der Generator unmittelbar oder mittelbar an den Verbrennungsmotor angebaut sein können.

Zu erwähnen ist außerdem, dass der Energiefluss vom Generator und/oder der Expansionsmaschine zum Verbrennungsmotor oder umgekehrt vorzugsweise über die Transmission erfolgt.

Die vorliegende Offenbarung betrifft auch ein Betriebsverfahren für und/oder ausgeführt durch eine Vorrichtung mit einem Verbrennungsmotor, einer Expansionsmaschine und einem Generator, wobei die Expansionsmaschine und der Generator sowohl untereinander als auch jeweils mit dem Verbrennungsmotor über eine Transmission wirkverbindbar sind und eine wahlweise und somit kombinierte elektrische Nutzung und mechanische Nutzung der Energie der Expansionsmaschine erfolgen kann. Im Rahmen der Erfindung kann der Generator über die Transmission vorzugsweise mit dem Verbrennungsmotor fest und/oder nicht-schaltbar, insbesondere permanent, wirkverbunden sein, so dass z. B. die Wirkverbindung zwischen dem Generator und dem Verbrennungsmotor nicht trennbar ist und somit zweckmäßig nicht wahlweise hergestellt und getrennt werden kann. Im Rahmen der Erfindung ist es alternativ oder ergänzend allerdings möglich, dass die Wirkverbindung zwischen der Expansionsmaschine und dem Verbrennungsmotor mittels der Transmission hergestellt und getrennt werden kann.

Weitere Verfahrensschritte ergeben sich aus der Offenbarung zur Vorrichtung, auf die verwiesen wird, um Wiederholungen zu vermeiden.

Die hierin zur Vorrichtung gemachte Offenbarung bzw. Beschreibung gilt sinngemäß auch für das Betriebsverfahren und ist insoweit ebenfalls zweckmäßig beanspruchbar.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Vorrichtung gemäß einer Ausführungsform der Erfindung,
- Figur 2: zeigt die Vorrichtung der Figur 1 in einem Expanderbetrieb,
- Figur 3: zeigt die Vorrichtung der Figur 1 in einem Generatorbetrieb, und
- Figur 4: zeigt die Vorrichtung der Figur 1 in einem Motorbetrieb.

Das erfindungsgemäße Konzept betrifft eine Vorrichtung und ein Verfahren, die anstelle einer reinen elektrischen oder reinen mechanischen Nutzung eine kombinierte Nutzungsvariante der rückgewonnenen Expanderenergie ermöglichen.

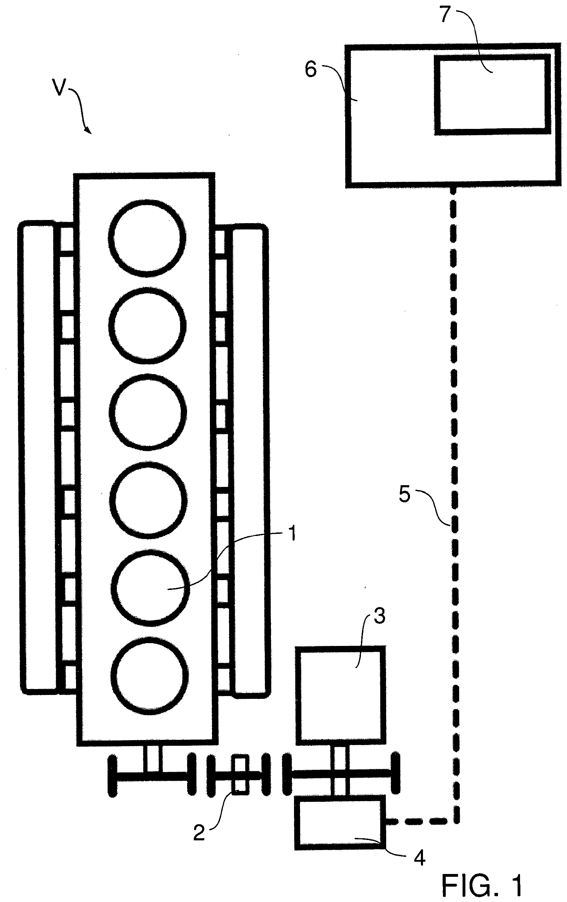

Eine Vorrichtung V zur kombinierten bzw. wahlweisen elektrischen und mechanischen Nutzung der Energie einer Expansionsmaschine 3 ist in Figur 1 gezeigt und eignet sich insbesondere für den Verbau in ein Kraftfahrzeug, zweckmäßig Nutzfahrzeug, z. B. Lastkraftwagen oder Omnibus.

Die Vorrichtung V umfasst einen Verbrennungsmotor 1, der vorzugsweise ein Diesel-, Otto-, oder Gasmotor für stationäre oder mobile (on-road, off-road oder marine) Anwendungen sein kann, oder ein Motor mit alternativen Kraftstoffen für die genannten Anwendungsbereiche. Direkt oder indirekt an den Verbrennungsmotor 1 angebaut sind die Expansionsmaschine 3 und ein Motor-Generator 4.

Die Expansionsmaschine 3 ist Teil eines Abwärmenutzungssystems, das Abwärme des Verbrennungsmotors 1 mit Hilfe eines Dampfkreislaufs, vorzugsweise eines ORC-Prozesses, wieder in nutzbare Energie umwandelt.

Der Motor-Generator 4 kann als Niederspannungs- (z. B. 24V, 48V) oder Hochspannungsgenerator (z. B. 400V bis 800V) ausgeführt sein und je nach Erfordernis stromerzeugend im Betriebsmodus "Generator" oder stromverbrauchend im Betriebsmodus "Motor" arbeiten.

Die Expansionsmaschine 3 und der Generator 4 stehen sowohl untereinander, als auch jeweils insbesondere mit der Kurbelwelle des Verbrennungsmotors 1 über eine Transmission 2 in Wirkverbindung.

Der Generator 4 ist mit dem Verbrennungsmotor 1 fest/nicht-schaltbar wirkverbunden, so dass zweckmäßig eine permanente Wirkverbindung vorliegt.

Die Expansionsmaschine 3 hingegen ist mit dem Verbrennungsmotor 1 schaltbar, insbesondere trennbar wirkverbunden, so dass zweckmäßig eine Wirkverbindung hergestellt und getrennt werden kann, insbesondere mittels der Transmission 2.

Die Transmission 2 kann aus einem Trieb und einem Schaltelement bestehen. Der Trieb der Transmission 2 kann z. B. eine ein- oder mehrstufige Reib- oder Stirnradstufe sein, zweckmäßig ohne oder mit zumindest einem Zwischenrad, z. B. in einen Rädertrieb des Verbrennungsmotors 1 integriert oder separat dazu angeordnet. Der Trieb der Transmission 2 kann ebenfalls als Hülltrieb (z. B. Ketten- oder Riementrieb) ausgeführt sein oder aus einer Kombination von verschiedenen Trieben bestehen.

Die Transmission 2 kann, abhängig von der Art der Expansionsmaschine 3, zusätzlich zum Trieb zumindest ein Kupplungs- oder Schaltelement aufweisen, mit dem die Verbindung zwischen Expansionsmaschine 3 und Verbrennungsmotor 1 getrennt werden kann, um z. B. beim Kaltstart die Expansionsmaschine 3 nicht mitschleppen zu müssen. Das Kupplungs- oder Schaltelement der Transmission 2 kann zweckmäßig aktiv (z. B. elektrisch oder hydraulisch betätigte Lamellenkupplung, schaltbarer Freilauf,...) oder passiv sein (z. B. Klemmkörperfreilauf).

Die Transmission 2 kann, abhängig von der Art der Expansionsmaschine 3, zusätzlich zum Trieb zumindest ein Entkoppelungselement aufweisen, mit dem die Übertragung von Drehschwingungen zwischen den verbundenen Komponenten Expansionsmaschine 3 - Verbrennungsmotor 1 - Generator 4 unterbunden werden kann. Das Entkoppelungselement der Transmission 2 kann z. B. eine torsionselastische Verbindung sein.

Der Motor-Generator 4 ist über eine elektrische/elektronische Verbindung 5 (z. B. Leitung(en), Schnittstelle(n), etc.) an ein zweckmäßig elektrisches / elektronisches System 6 angeschlossen, das in erster Linie die Aufgabe der Speicherung von elektrischer Energie mittels eines Energiespeichers 7 und der Steuerung des Betriebsmodus des Motor-Generators 4 mittels einer Steuereinheit aufweist. Das System 6 kann ferner ein Kraftfahrzeug-Bordnetz und/oder zumindest einen elektrischen Verbraucher des Kraftfahrzeugs umfassen und/oder eine im Kraftfahrzeug verbaute elektrische und/oder elektronische Infrastruktur eines hybriden Antriebssystems sein bzw. mit einem hybriden Antriebssystem kombiniert sein.

Über einen vorzugsweise in das elektrische System 6 integrierten DC/DC-Wandler kann bei höheren Betriebsspannungen des Generators 4 (z. B. 48V) auch die elektrische Energie für das Bordnetz und die elektrischen Verbraucher auf dem 24V-Spannungsniveau bereitgestellt werden. Dadurch kann möglicherweise der bisherige 24V-Generator entfallen und in den freien Bauraum können die Komponenten Expander 3 und Motor-Generator 4 nahezu bauraumneutral verbaut werden. Zusätzlich kann die Speichereinrichtung 7 (z. B. 48V-Batterien) des elektrischen Systems 6 den Großteil der Speicherkapazität der bisherigen 24V-Batterien ersetzen, lediglich für den Starter des Kraftfahrzeugs kann eine Restkapazität auf 24V-Basis erforderlich bleiben.

Das elektrische System 6 kann wie zuvor erwähnt ein Teil einer im Kraftfahrzeug verbauten elektrischen und/oder elektronischen Infrastruktur eines hybriden Antriebssystems sein, z. B. durch diese ersetzt und/oder mit dieser kombiniert werden. In diesem Fall kann der Motor-Generator 4 als reiner Generator ausgeführt sein, wobei die Umwandlung und Einleitung von vorzugsweise im Energiespeicher 7 gespeicherter elektrischen Energie dann über den Elektromotor des bereits im Kraftfahrzeug verbauten hybriden Antriebssystems sein.

Die Vorrichtung V ist ausgeführt, um in einem Expanderbetrieb, einem Generatorbetrieb und einem Motorbetrieb betrieben zu werden, die vorzugweise über eine Steuereinheit des elektrischen Systems 6 gesteuert werden können.

Das Verfahren zur kombinierten elektrischen und mechanischen Nutzung der Expanderenergie umfasst mehrere mögliche Betriebszustände, die über die Steuereinheit des elektrischen Systems 6 gesteuert werden.

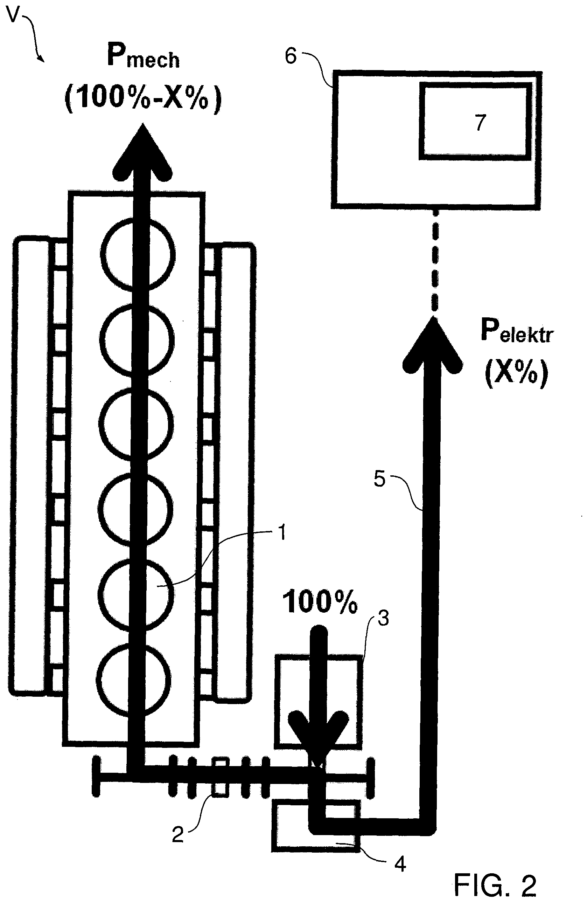

Figur 2 zeigt die Vorrichtung V in einem Expanderbetrieb.

Der Betriebszustand "Expanderbetrieb" tritt in jenem Zustand auf, in dem der Verbrennungsmotor 1 Antriebsenergie generiert und das Abwärmenutzungssystem zur Abwärmenutzung in Betrieb ist.

In diesem Betriebszustand generiert die Expansionsmaschine 3 mechanische Energie und stellt diese über die Transmission 2 dem Verbrennungsmotor 1 zur Verfügung. Der Motor-Generator 4 arbeitet währenddessen im Generatorbetrieb und erzeugt die erforderliche elektrische Energie für das System 6, z. B das Bordnetz und elektrische Aktuatoren bzw. Verbraucher im Kraftfahrzeug.

Der Energiefluss im Expanderbetrieb gestaltet sich, wie in Figur 2 abgebildet im Wesentlichen wie folgt:
Von den 100 % Energie, die die Expansionsmaschine 3 generiert, werden über den Motor-Generator 4 im Generatorbetrieb X % in elektrische Energie umgewandelt und dem elektrischen System 6 zur Verfügung gestellt. Die restlichen (100-X) % stehen als mechanische Energie an der Kurbelwelle des Verbrennungsmotors 1 bzw. für den Verbrennungsmotor 1 zur Verfügung. Die Größe des Wertes X richtet sich nach dem aktuellen Stromverbrauch des Kraftfahrzeugs.

Vorteile gegenüber der rein elektrischen oder rein mechanischen Nutzung:
Trotz elektrischer Nutzung ist die erzeugte elektrische Energie unabhängig von der aktuell generierten Expanderenergie, da der Überschuss wirkungsgradoptimal als mechanische Energie an den Verbrennungsmotor 1 fließt.

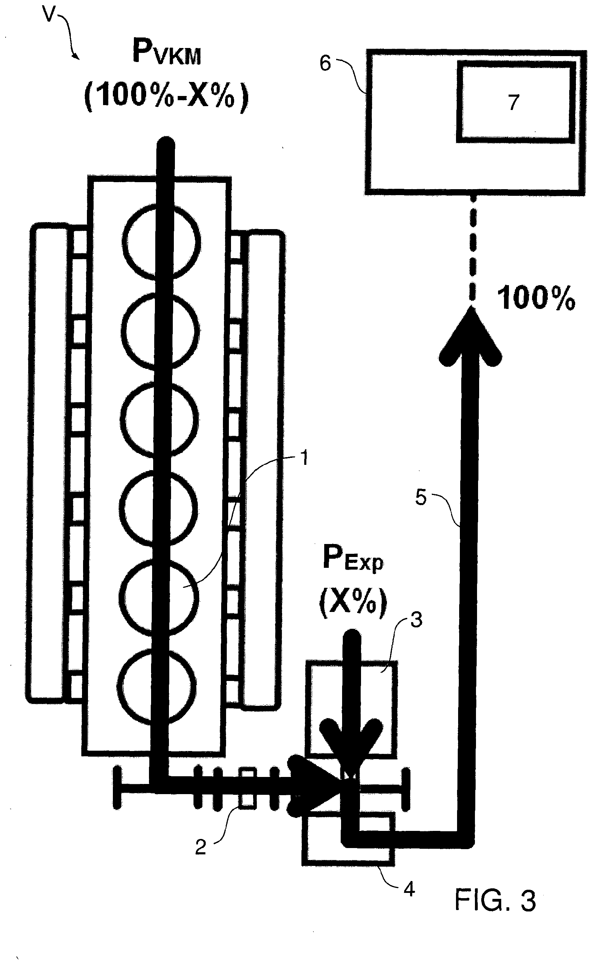

Figur 3 zeigt die Vorrichtung V in einem Generatorbetrieb.

Der Betriebszustand "Generatorbetrieb" tritt in jenem Zustand auf, in dem das Abwärmenutzungssystem noch nicht betriebsbereit ist und sich in der Aufwärmphase befindet (z. B. nach Kaltstart) oder in dem der Verbrennungsmotor 1 in einem Schub- und/oder Bremsbetrieb ist.

In der Aufwärmphase des Abwärmenutzungssystems generiert die Expansionsmaschine 3 noch keine mechanische Energie. Der Motor-Generator 4 arbeitet währenddessen im Generatorbetrieb und erzeugt die erforderliche elektrische Energie für das System 6, z. B. das Bordnetz und die elektrischen Aktuatoren bzw. Verbraucher im Kraftfahrzeug.

Im Schub- und/oder Bremsbetrieb des Verbrennungsmotors 1 generiert die Expansionsmaschine 3 trotz fehlendem Wärmeeintrag noch nutzbare Energie, aufgrund der thermischen Trägheit des Abwärmenutzungssystems. Der Motor-Generator 4 arbeitet währenddessen im Generatorbetrieb und erzeugt die maximal mögliche elektrische Energie, die dem Energiespeicher 7 des Systems 6 zur Verfügung gestellt wird.

Im Generatorbetrieb ist es insbesondere möglich, dass die Expansionsmaschine 3 nutzbare Energie erzeugt und zwar mittels Wärme aus einem Motorstaubremssystem, wobei die Wärme aus dem Motorstaubremssystem über das Abwärmenutzungssystem mittelbar zur Expansionsmaschine 3 gelangt. Die erzeugte nutzbare Energie kann in den Energiespeicher 7 gespeichert werden und in einem anschließenden Motorbetrieb dem Verbrennungsmotor 1 zur Verfügung gestellt werden.

Der Energiefluss im Generatorbetrieb gestaltet sich, wie in Figur 3 abgebildet im Wesentlichen wie folgt:
Von den 100 % Energie, die der Motor-Generator 4 im Generatorbetrieb erzeugt, stammen X % von der Expansionsmaschine 3, die restlichen (100-X) % werden vom Verbrennungsmotor 1 über die wirkungsgradoptimale Transmission 2 zur Verfügung gestellt. Die Größe des Wertes X beträgt während des Aufwärmvorganges des Abwärmenutzungssystems Null.

Vorteile gegenüber der rein elektrischen oder rein mechanischen Nutzung:
Im Schub- oder Bremsbetrieb des Verbrennungsmotors 1 muss die aufgrund der thermischen Trägheit im Abwärmenutzungssystem gespeicherte Energie nicht nutzlos an der Expansionsmaschine 3 gebypasst werden, sondern ist nutzbringend in elektrische Energie umwandelbar und speicherbar.

Vorzugsweise kann zusätzlich im Schub- und Bremsbetrieb des Verbrennungsmotors 1 durch den Motor-Generator 4 Energie rekuperiert und in den Energiespeicher 7 des Systems 6 geladen werden.

Verbrennungsmotoren 1 in den beschriebenen Anwendungen sind oft mit modernen Motorbremssystemen ausgerüstet, die im Motorbremsbetrieb hohe, heiße Gasmassenströme durch den Verbrennungsmotor 1 erzeugen. Bei einer rein elektrischen oder rein mechanischen Nutzung der Expanderenergie des Abwärmenutzungssystems geht diese über das Abgassystem an die Umgebung verloren, da die generierte Expanderenergie in diesem Betriebszustand nicht verwertet werden kann. Bei der erfindungsgemäßen kombinierten Nutzung kann diese Wärme genutzt und über den Motor-Generator 4 und das System 6 zwischengespeichert und in der darauffolgenden Antriebsphase wieder genutzt werden.

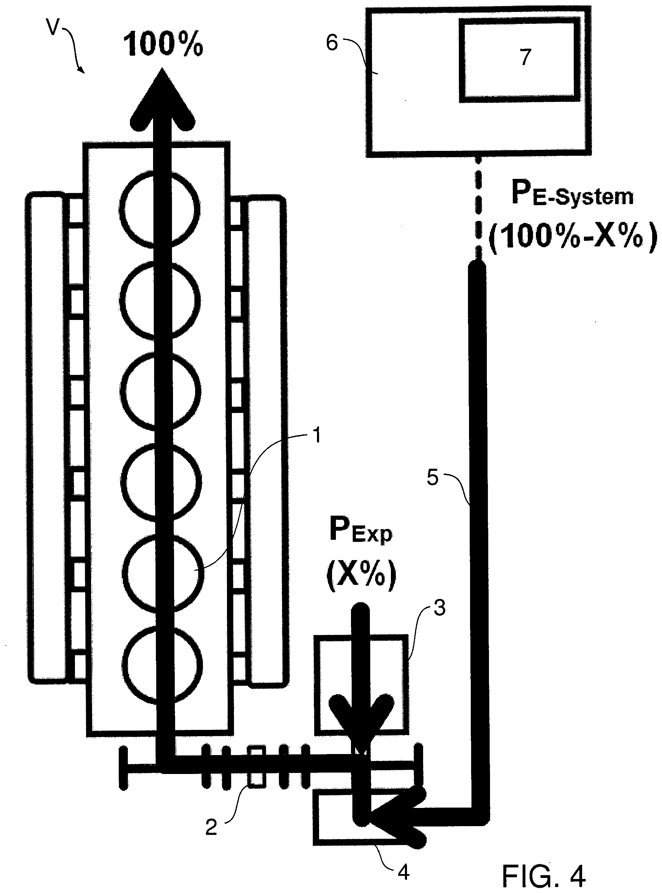

Figur 4 zeigt die Vorrichtung V in einem Motorbetrieb.

Der Betriebszustand "Motorbetrieb" tritt in jenem Zustand auf, in dem das Abwärmenutzungssystem in Betrieb bzw. außer Betrieb ist und der Energiespeicher 7 des elektrischen Systems 6 in einem vorangegangenen Schub- und/oder Bremsbetrieb des Verbrennungsmotors 1 mit Hilfe des Motor-Generators 4 voll oder auch nur teilweise aufgeladen wurde.

In diesem Betriebszustand generiert die Expansionsmaschine 3 entweder keine mechanische Energie, sie generiert mechanische Energie oder sie beginnt durch den wieder vorhandenen Wärmeeintrag ins Abwärmenutzungssystem wieder mechanische Energie zu generieren und stellt diese über die Transmission 2 dem Verbrennungsmotor 1 zur Verfügung.

Der Motor-Generator 4 arbeitet währenddessen im Motorbetrieb und leitet die aus dem Energiespeicher 7 des Systems 6 entnommene und in mechanische Energie umgewandelte, elektrische Energie auch über die Transmission 2 in den Verbrennungsmotor 1 ein.

Das Bordnetz und die elektrischen Aktuatoren bzw. Verbraucher im Kraftfahrzeug können z. B. über einen DC/DC-Wandler vom Energiespeicher 7 des Systems 6 versorgt werden, bis dieser entleert ist und der Motor-Generator 4 wieder in den Generatorbetrieb übergeht.

Der Energiefluss gestaltet sich, wie in Figur 4 abgebildet im Wesentlichen wie folgt:
Von den 100 % Energie, die dem Verbrennungsmotor 1 über die Transmission 2 zur Verfügung gestellt werden, stammen X % von der Expansionsmaschine 3, die restlichen (100-X) % kommen vom Motor-Generator 4, der die Energie im Energiespeicher 7 des Systems 6 verwendet. Steht der Expansionsmaschine 3 nicht ausreichend Energie aus dem Abwärmenutzungssystem zur Verfügung, beträgt die Größe des Wertes X Null.

Vorteile gegenüber der rein elektrischen oder rein mechanischen Nutzung:
Im an eine Schub- und/oder Bremsphase des Verbrennungsmotors 1 anschließenden befeuerten Betrieb des Verbrennungsmotors 1 steht unmittelbar keine Energie vom Expander 3 zur Verfügung, da sich das Abwärmenutzungssystem erst wieder aufwärmen muss. Gerade in diesen kraftstoffintensiven Betriebszuständen kann die im Schub- und/oder Bremsbetrieb des Verbrennungsmotors 1 rekuperierte und gespeicherte Energie über den Motor-Generator 4 unmittelbar dem Verbrennungsmotor 1 verbrauchssenkend zur Verfügung gestellt werden.

Zu erwähnen ist, dass der Generator 4 nicht als Motor-Generator ausgeführt sein muss, sondern auch als reiner Generator ausgeführt sein kann. In diesem Fall kann das System 6 einen Elektromotor aufweisen, der die Motor-Funktion des Motor-Generators 4 übernehmen kann.

Das System 6 und der Elektromotor können dabei Teil eines bereits im Kraftfahrzeug verbauten hybriden Antriebssystems sein.

### Bezugszeichenliste

- 1: Verbrennungsmotor
- 2: Transmission
- 3: Expansionsmaschine (z. B. Expander)
- 4: Generator bzw. Motor-Generator
- 5: Verbindung (elektrisch/elektronisch)
- 6: System (elektrisch/elektronisch)
- 7: Energiespeicher zur Speicherung elektrischer Energie
- V: Vorrichtung

## Patentansprüche

1. Vorrichtung (V), vorzugsweise für ein Kraftfahrzeug, insbesondere Nutzfahrzeug, mit einem Verbrennungsmotor (1), einer Expansionsmaschine (3) und einem Generator (4),
wobei die Expansionsmaschine (3) und der Generator (4) sowohl untereinander als auch jeweils mit dem Verbrennungsmotor (1) über eine Transmission (2) wirkverbindbar sind, um eine wahlweise elektrische Nutzung und mechanische Nutzung der Energie der Expansionsmaschine (3) zu ermöglichen;
wobei der Generator (4) mit einem System (6) verbunden ist und das System (6) einen mittels des Generators (4) aufladbaren Energiespeicher (7) zur Speicherung elektrischer Energie, zumindest einen elektrischen Verbraucher eines Kraftfahrzeugs, einen DC/DC Wandler zur Versorgung eines Bord-Netzes eines Kraftfahrzeugs und eine Steuereinrichtung zur Steuerung des Generators (4) aufweist; und
wobei in einem Generatorbetrieb der Generator (4) als Generator wirkt und die Expansionsmaschine (3) trotz fehlendem oder geringem Wärmeeintrag aus dem Verbrennungsmotor (1) wegen der thermischen Trägheit des Abwärmenutzungssystems noch nutzbare Energie generiert, wobei der Generator (4) aus der nutzbaren Energie der Expansionsmaschine (2) und aus der mechanischen Energie des Verbrennungsmotors (1) elektrische Energie erzeugt und die elektrische Energie dem System (6) zur Verfügung gestellt wird; und
wobei in einem Expanderbetrieb das Abwärmenutzungssystem Abwärme des Verbrennungsmotors (1) in nutzbare Energie umwandelt, wobei die Expansionsmaschine (3) aus der nutzbaren Energie mechanische Energie erzeugt und die mechanische Energie über die Transmission (2) dem Verbrennungsmotor (1) zur Verfügung gestellt wird, und der Generator (4) aus der nutzbaren Energie elektrische Energie erzeugt und die elektrische Energie dem System (6) zur Verfügung gestellt wird; und
wobei in einem Motorbetrieb der Generator (4) als Motor oder ein Elektromotor des Systems (6) als Motor wirkt und aus dem Energiespeicher (7) stammende elektrische Energie in mechanische Energie umwandelt und über die Transmission (2) dem Verbrennungsmotor (1) zur Verfügung stellt.

2. Vorrichtung (V) nach Anspruch 1, **dadurch gekennzeichnet, dass** die Expansionsmaschine (3) Teil eines Abwärmenutzungssystems zur Umwandlung von Abwärme des Verbrennungsmotors (1) in nutzbare Energie ist, insbesondere mittels eines Dampfkreislaufs.

3. Vorrichtung (V) nach Anspruch 1 oder 2, **dadurch gekennzeichnet, dass** die Expansionsmaschine (3) Teil eines Abwärmenutzungssystems zur Umwandlung von Abwärme eines Motorstaubremssystems in nutzbare Energie ist, insbesondere mittels eines Dampfkreislaufs.

4. Vorrichtung (V) nach einem der vorhergehenden Ansprüche, **dadurch gekennzeichnet, dass** die Expansionsmaschine (3) und der Generator (4) sowohl untereinander als auch jeweils mit einer Welle, vorzugsweise Kurbelwelle, des Verbrennungsmotor (1) oder einem Nebenabtrieb des Verbrennungsmotors (1) über die Transmission (2) wirkverbindbar sind.

5. Vorrichtung (V) nach einem der vorhergehenden Ansprüche, **dadurch gekennzeichnet, dass**
c) der Generator (4) als Motor-Generator ausgeführt ist, vorzugsweise um wahlweise als Generator oder als Motor zu arbeiten, oder
d) der Generator (4) als reiner Generator ausgeführt ist.

6. Vorrichtung (V) nach einem der vorhergehenden Ansprüche, **dadurch gekennzeichnet, dass** das System (6) einen Elektromotor, über den Energie aus dem Energiespeicher (7) in mechanische Energie umgewandelt und dem Verbrennungsmotor (1) zur Verfügung gestellt wird, aufweist.

7. Vorrichtung (V) nach Anspruch 6, **dadurch gekennzeichnet, dass** der Energiespeicher (7) elektrische Energie für das Bord-Netz und/oder den zumindest einen elektrischen Verbraucher zur Verfügung zu stellt.

8. Vorrichtung (V) nach Anspruch 6 oder 7, **dadurch gekennzeichnet, dass** das System (6) Teil einer im Kraftfahrzeug verbaubaren elektrischen und/oder elektronischen Infrastruktur eines hybriden Antriebssystems ist.

9. Vorrichtung (V) nach einem der vorhergehenden Ansprüche, **dadurch gekennzeichnet, dass** der Generator (4) mit dem Verbrennungsmotor (1) fest und/oder nicht-schaltbar wirkverbunden ist.

10. Vorrichtung (V) nach einem der vorhergehenden Ansprüche, **dadurch gekennzeichnet, dass** die Transmission (2) ausgeführt ist,
- die Wirkverbindung zwischen der Expansionsmaschine (3) und dem Verbrennungsmotor (1) wahlweise herzustellen und zu trennen, und/oder
- eine feste und/oder nicht-schaltbare Wirkverbindung zwischen dem Generator (4) und dem Verbrennungsmotor (1) zu gewährleisten.

11. Vorrichtung (V) nach einem der vorhergehenden Ansprüche, **dadurch gekennzeichnet, dass** die Vorrichtung (V) ausgeführt ist, wahlweise in dem Expanderbetrieb, dem Motorbetrieb und dem Generatorbetrieb zu arbeiten.

12. Vorrichtung (V) nach einem der vorhergehenden Ansprüche, **dadurch gekennzeichnet, dass** die Expansionsmaschine (3) während dem Motorbetrieb entweder keine mechanische Energie generiert, mechanische Energie generiert oder zumindest beginnt mechanische Energie zu generieren und diese über die Transmission (2) dem Verbrennungsmotor (1) zur Verfügung stellt.

13. Vorrichtung (V) nach einem der vorhergehenden Ansprüche, **dadurch gekennzeichnet, dass** in einem Motorbetrieb der Generator (4) als Motor oder der Elektromotor des Systems (6) als Motor wirkt, so lange, bis der Energiespeicher (7) zumindest großteils entleert ist und der Generator (4) wieder in einen Generatorbetrieb übergeht.

14. Vorrichtung (V) nach einem der vorhergehenden Ansprüche, **dadurch gekennzeichnet, dass** in einem Generatorbetrieb der Generator (4) als Generator wirkt und die Expansionsmaschine (3) mittels Wärmeeintrags aus einem Motorstaubremssystem, aber vorzugsweise ohne Wärmeeintrag aus der innermotorischen Verbrennung des Verbrennungsmotors (1), nutzbare Energie erzeugt und die nutzbare Energie in einem Energiespeicher (7) gespeichert wird und in einem anschließenden Motorbetrieb dem Verbrennungsmotor (1) zur Verfügung gestellt wird.

15. Kraftfahrzeug, vorzugsweise Nutzfahrzeug, insbesondere Lastkraftwagen oder Omnibus, mit einer Vorrichtung (V) nach einem der Ansprüche 1 bis 14.

## Claims

1. An apparatus (V), preferably for a motor vehicle, in particular a utility vehicle, with an internal combustion engine (1), an expansion machine (3) and a generator (4),
it being possible for the expansion machine (3) and the generator (4) to be operatively connected both among one another and in each case to the internal combustion engine (1) via a transmission (2), in order to make a selectively electric use and mechanical use of the energy of the expansion machine (3) possible;
the generator (4) being connected to a system (6), and the system (6) having an energy store (7) which can be charged by means of the generator (4) for the storage of electric energy, at least one electric consumer of a motor vehicle, a DC/DC converter for the supply of an on-board electric system of a motor vehicle, and a control device for controlling the generator (4); and
in a generator mode, the generator (4) acting as a generator, and, despite a missing or low heat input from the internal combustion engine (1), the expansion machine (3) still generating utilizable energy on account of the thermal inertia of the waste heat recovery system, the generator (4) generating electric energy from the utilizable energy of the expansion machine (2) and from the mechanical energy of the internal combustion engine (1), and the electric energy being made available to the system (6); and,
in an expander mode, the waste heat recovery system converting waste heat of the internal combustion engine (1) into utilizable energy, the expansion machine (3) generating mechanical energy from the utilizable energy, and the mechanical energy being made available to the internal combustion engine (1) via the transmission (2), and the generator (4) generating electric energy from the utilizable energy, and the electric energy being made available to the system (6); and
in a motor mode, the generator (4) acting as a motor or an electric motor of the system (6) acting as a motor, and converting electric energy which comes from the energy store (7) into mechanical energy, and making it available to the internal combustion engine (1) via the transmission (2).

2. The apparatus (V) according to Claim 1, **characterized in that** the expansion machine (3) is part of a waste heat recovery system for the conversion of waste heat of the internal combustion engine (1) into utilizable energy, in particular by means of a steam cycle.

3. The apparatus (V) according to Claim 1 or 2, **characterized in that** the expansion machine (3) is part of a waste heat recovery system for the conversion of waste heat of an engine backpressure brake system into utilizable energy, in particular by means of a steam cycle.

4. The apparatus (V) according to one of the preceding claims, **characterized in that** the expansion machine (3) and the generator (4) can be operatively connected both among one another and in each case to a shaft, preferably a crankshaft, of the internal combustion engine (1) or a power take-off of the internal combustion engine (1) via the transmission (2).

5. The apparatus (V) according to one of the preceding claims, **characterized in that**
c) the generator (4) is configured as a motor-generator, preferably in order to operate selectively as a generator or as a motor, or
d) the generator (4) is configured as a pure generator.

6. The apparatus (V) according to one of the preceding claims, **characterized in that** the system (6) has an electric motor, via which energy from the energy store (7) is converted into mechanical energy and is made available to the internal combustion engine (1).

7. The apparatus (V) according to Claim 6, **characterized in that** the energy store (7) makes electric energy available for the on-board electric system and/or the at least one electric consumer.

8. The apparatus (V) according to Claim 6 or 7, **characterized in that** the system (6) is part of an electric and/or electronic infrastructure of a hybrid drive system, which infrastructure can be installed in the motor vehicle.

9. The apparatus (V) according to one of the preceding claims, **characterized in that** the generator (4) is operatively connected to the internal combustion engine (1) in a fixed and/or non-switchable manner.

10. The apparatus (V) according to one of the preceding claims, **characterized in that** the transmission (2) is configured
- to selectively establish and to disconnect the operative connection between the expansion machine (3) and the internal combustion engine (1), and/or
- to ensure a fixed and/or non-switchable operative connection between the generator (4) and the internal combustion engine (1).

11. The apparatus (V) according to one of the preceding claims, **characterized in that** the apparatus (V) is configured to operate selectively in the expander mode, the motor mode and the generator mode.

12. The apparatus (V) according to one of the preceding claims, **characterized in that**, during the motor mode, the expansion machine (3) either does not generate any mechanical energy, generates mechanical energy, or at least begins to generate mechanical energy, and makes the said mechanical energy available to the internal combustion engine (1) via the transmission (2).

13. The apparatus (V) according to one of the preceding claims, **characterized in that**, in a motor mode, the generator (4) acts as a motor or the electric motor of the system (6) acts as a motor until the energy store (7) is at least largely emptied and the generator (4) transfers into a generator mode again.

14. The apparatus (V) according to one of the preceding claims, **characterized in that**, in a generator mode, the generator (4) acts as a generator, and the expansion machine (3) generates utilizable energy by means of heat input from an engine backpressure brake system, but preferably without heat input from the internal engine combustion of the internal combustion engine (1), and the utilizable energy is stored in an energy store (7) and is made available to the internal combustion engine (1) in a subsequent motor mode.

15. A motor vehicle, preferably utility vehicle, in particular lorry or omnibus, with an apparatus (V) according to one of Claims 1 to 14.

## Revendications

1. Arrangement (V), de préférence pour un véhicule automobile, notamment un véhicule utilitaire, comprenant un moteur à combustion interne (1), une machine à expansion (3) et un générateur (4),
la machine à expansion (3) et le générateur (4) pouvant être reliés fonctionnellement aussi bien entre eux que respectivement avec le moteur à combustion interne (1) par le biais d'une transmission (2) afin de rendre possible, au choix, une utilisation électrique et une utilisation mécanique de l'énergie de la machine à expansion (3) ;
le générateur (4) étant relié à un système (6) et le système (6) possédant un accumulateur d'énergie (7) pouvant être chargé au moyen du générateur (4) en vue d'accumuler de l'énergie électrique, au moins un récepteur électrique d'un véhicule automobile, un convertisseur CC/CC destiné à l'alimentation d'un réseau de bord d'un véhicule automobile et un dispositif de commande destiné à commander le générateur (4), et
dans un régime de générateur, le générateur (4) agissant en tant que générateur et la machine à expansion (3), malgré un apport de chaleur manquant ou faible en provenance du moteur à combustion interne (1), générant encore de l'énergie utilisable en raison de l'inertie thermique du système de récupération de la chaleur dissipée, le générateur (4) générant de l'énergie électrique à partir de l'énergie utilisable de la machine à expansion (2) et à partir de l'énergie mécanique du moteur à combustion interne (1) et l'énergie électrique étant mise à disposition du système (6) ; et
dans un régime de détendeur, le système de récupération de la chaleur dissipée convertissant la chaleur dissipée du moteur à combustion interne (1) en énergie utilisable, la machine à expansion (3) générant de l'énergie mécanique à partir de l'énergie utilisable et l'énergie mécanique étant mise à disposition du moteur à combustion interne (1) par le biais de la transmission (2), et le générateur (4) générant de l'énergie électrique à partir de l'énergie utilisable et l'énergie électrique étant mise à disposition du système (6) ; et
dans un régime de moteur, le générateur (4) agissant en tant que moteur ou un moteur électrique du système (6) en tant que moteur et l'énergie électrique issue de l'accumulateur d'énergie (7) étant convertie en énergie mécanique et mise à disposition du moteur à combustion interne (1) par le biais de la transmission (2).

2. Arrangement (V) selon la revendication 1, **caractérisé en ce que** la machine à expansion (3) est une partie d'un système de récupération de la chaleur dissipée destiné à convertir la chaleur dissipée du moteur à combustion interne (1) en énergie utilisable, notamment au moyen d'un circuit de vapeur.

3. Arrangement (V) selon la revendication 1 ou 2, **caractérisé en ce que** la machine à expansion (3) est une partie d'un système de récupération de la chaleur dissipée destiné à convertir la chaleur dissipée d'un système de frein moteur à refoulement en énergie utilisable, notamment au moyen d'un circuit de vapeur.

4. Arrangement (V) selon l'une des revendications précédentes, **caractérisé en ce que** la machine à expansion (3) et le générateur (4) peuvent être reliés fonctionnellement aussi bien entre eux que respectivement à un arbre, de préférence un vilebrequin, du moteur à combustion interne (1) et une prise de force auxiliaire du moteur à combustion interne (1) par le biais d'une transmission (2).

5. Arrangement (V) selon l'une des revendications précédentes, **caractérisé en ce que**
c) le générateur (4) est réalisé sous la forme d'un moteur-générateur, de préférence afin de pouvoir fonctionner au choix en tant que générateur ou en tant que moteur, ou
d) le générateur (4) est réalisé sous la forme d'un générateur pur.

6. Arrangement (V) selon l'une des revendications précédentes, **caractérisé en ce que** le système (6) possède un moteur électrique, par le biais duquel l'énergie issue de l'accumulateur d'énergie (7) est convertie en énergie mécanique et mise à disposition du moteur à combustion interne (1).

7. Arrangement (V) selon la revendication 6, **caractérisé en ce que** l'accumulateur d'énergie (7) met à disposition de l'énergie électrique pour le réseau de bord et/ou l'au moins un récepteur électrique.

8. Arrangement (V) selon la revendication 6 ou 7, **caractérisé en ce que** le système (6) est une partie d'une infrastructure électrique et/ou électronique d'un système de propulsion hybride pouvant être montée dans le véhicule automobile.

9. Arrangement (V) selon l'une des revendications précédentes, **caractérisé en ce que** le générateur (4) est relié fonctionnellement au moteur à combustion interne (1) de manière fixe et/ou non débrayable.

10. Arrangement (V) selon l'une des revendications précédentes, **caractérisé en ce que** la transmission (2) est réalisée
- pour établir et pour séparer, au choix, la liaison fonctionnelle de la machine à expansion (3) et du moteur à combustion interne (1) et/ou
- pour garantir une liaison fonctionnelle fixe et/ou non débrayable entre le générateur (4) et le moteur à combustion interne (1).

11. Arrangement (V) selon l'une des revendications précédentes, **caractérisé en ce que** l'arrangement (V) est réalisé pour fonctionner au choix dans le régime de détendeur, le régime de moteur et le régime de générateur.

12. Arrangement (V) selon l'une des revendications précédentes, **caractérisé en ce que** la machine à expansion (3), pendant le régime de moteur, soit ne génère pas d'énergie mécanique, soit génère de l'énergie mécanique ou au moins commence à générer de l'énergie mécanique et met celle-ci à disposition du moteur à combustion interne (1) par le biais de la transmission (2).

13. Arrangement (V) selon l'une des revendications précédentes, **caractérisé en ce que** dans un régime de moteur, le générateur (4) agit en tant que moteur ou un moteur électrique du système (6) en tant que moteur jusqu'à ce que l'accumulateur d'énergie (7) est au moins en majeure partie épuisé et le générateur (4) transite de nouveau dans un régime de générateur.

14. Arrangement (V) selon l'une des revendications précédentes, **caractérisé en ce que** dans un régime de générateur, le générateur (4) agit en tant que générateur et la machine à expansion (3) génère de l'énergie utilisable au moyen de l'apport de chaleur issu d'un système de frein moteur à refoulement, mais de préférence sans apport de chaleur issu de la combustion interne au moteur du moteur à combustion interne (1), et l'énergie utilisable est accumulée dans un accumulateur d'énergie (7) et est ensuite mise à disposition du moteur à combustion interne (1) dans un régime de moteur qui suit.

15. Véhicule automobile, de préférence véhicule utilitaire, notamment poids-lourd ou autobus, comprenant un arrangement (V) selon l'une des revendications 1 à 14.
